# EUROPÄISCHE PATENTANMELDUNG

(11) **EP 1 051 017 A2**
(43) Veröffentlichungstag der Anmeldung: **08.11.2000**
(21) Anmeldenummer: 00106968.1
(22) Anmeldetag: 01.04.2000
(51) Int. Cl.: H04M 3/533

(54) **Verfahren und System zum teilnehmerseitigen Mithören eines an einem Netz-Anrufbeantworter eingehenden Gesprächs**

(30) Priorität: 04.05.1999 DE 19920382
(71) Anmelder: Deutsche Telekom AG, 53113 Bonn (DE)
(72) Erfinder: Schrimpf, Werner, 53179 Bonn (DE)

(57) **Zusammenfassung**

Es sind Festnetze und Mobilnetze bekannt, in denen zentrale Netz-Anrufbeantworter implementiert sind, die von den Teilnehmern mitbenutzt werden können. Allerdings ist es nicht möglich, die an einem Netz-Anrufbeantworter eingehenden Gespräche teilnehmerseitig mitzuhören oder, wenn gewünscht, sogar zu übernehmen.

Erfindungsgemäß wird daher unter anderem ein Kommunikationssystem bereitgestellt, welches wenigstens einen mit einem Kommunikationsnetz verbundenen Netz-Anrufbeantworter (10) und mehrere Vermittlungsstellen (60, 80, 90), denen jeweils wenigstens ein Teilnehmer zugeordnet ist, umfaßt. Ferner ist wenigstens eine Kommunikations-Endeinrichtung (30, 40) vorgesehen, der eine Mithör-Einrichtung (35, 45) mit einem aktivierbaren Lautsprecher zum Mithören eines am Netz-Anrufbeantworter (10) eingehenden Gesprächs, das für den gerufenen Teilnehmer der Kommunikations-Endeinrichtung (30, 40) bestimmt ist, zugeordnet ist. Das Kommunikationsnetz zeichnet sich dadurch aus, daß es zum Weiterleiten des Gesprächs zum Netz-Anrufbeantworter (10) und gleichzeitig zur Mithör-Einrichtung (35, 45) des gerufenen Teilnehmers ausgebildet ist.

## Beschreibung

Die Erfindung betrifft ein Verfahren zum teilnehmerseitigen Mithören eines an einem Netz-Anrufbeantworter eingehenden Gesprächs, wobei der Netz-Anrufbeantworter mit einem mehrere Vermittlungsstellen und mehrere Teilnehmer umfassenden Kommunikationsnetz verbunden ist. Ferner betrifft die Erfindung ein Kommunikationssystem zur Durchführung des Verfahrens sowie eine Mithör-Vorrichtung zum Einsatz in einem solchen Kommunikationssystem.

In dem Aufsatz 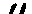 Die T-Net-Box-Der Anrufbeantworter im Netz", erschienen in Deutsche Telekom, Unterrichtsblätter, Jg. 51 1/1998, Seiten 4-13, ist ein Netz-Anrufbeantworter offenbart, der mit einem öffentlichen Fernsprechnetz verbunden ist. Ein für einen gerufenen Teilnehmeranschluß bestimmtes Gespräch wird bei aktivierter Anrufweiterleitung zum Netz-Anrufbeantworter weitergeleitet, wenn beispielsweise der gerufene Teilnehmeranschluß im Augenblick besetzt ist oder das ankommende Gespräch nicht entgegengenommen werden kann. Ein Dienste-Nutzer kann zu jeder Zeit die für ihn auf dem Netz-Anrufbeantworter aufgezeichnete Nachricht von jedem beliebigen Teilnehmeranschluß aus abfragen. Mittlerweile gibt es auch sogenannte Pager, die dem Dienste-Nutzer signalisieren, daß für ihn im Netz-Anrufbeantworter eine Nachricht eingegangen und aufgezeichnet worden ist.

Auch beim Mobilfunk ist es üblich, Netz-Anrufbeantworter in einem Mobilfunknetz zu implementieren.

Allen bekannten Netz-Anrufbeantwortern haftet der Nachteil an, daß ein aktuell an einem Netz-Anrufbeantworter eingehendes Gespräch nicht vom Dienste-Nutzer mitgehört oder an seinem Fernsprechapparat übernommen werden kann. Das Fehlen dieser Funktion stellt für den Dienste-Nutzer eine deutliche Komforteinschränkung dar, da dieser den Netz-Anrufbeantworter zur Abfrage der eingegangenen Nachrichten zurückrufen muß. Dieser Vorgang ist auch stets mit einem höheren Zeitaufwand verbunden. Für viele Dienste-Nutzer ist aber gerade die 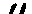 Mithör-Möglichkeit", die herkömmliche kundenindividuelle Anrufbeantworter bereits verwirklichen, von besonderer Attraktivität. So ist es hiermit möglich, bei eingehenden Anrufen zu entscheiden, ob der Anruf sofort übernommen oder der Anruf zunächst aufgezeichnet und später erwidert werden soll.

Der Erfindung liegt daher die Aufgabe zugrunde, ein Verfahren, ein Kommunikationssystem sowie eine Mithör-Vorrichtung bereitzustellen, die dem Nutzer eines Netz-Anrufbeantworters den gleichen Komfort anbieten können, der Nutzern von herkömmlichen teilnehmerseitig installierten Anrufbeantwortern bereits zur Verfügung steht.

Ein Kerngedanke der Erfindung ist darin zu sehen, die Funktion 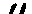 Mithören" eines an einem Anrufbeantworter eingehenden Gesprächs 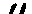 auch für Nutzer eines Netz-Anrufbeantworters" verfügbar zu machen.

Dieses technische Problem wird zum einen durch die Verfahrensschritte des Anspruchs 1 gelöst.

Danach ist ein Verfahren zum teilnehmerseitigen Mithören eines an einem Netz-Anrufbeantworter eingehenden Gesprächs umschrieben, wobei der Netz-Anrufbeantworter mit einem mehrere Vermittlungsstellen und mehrere Teilnehmer umfassenden Kommunikationsnetz verbunden ist, und wobei wenigstens einigen der Teilnehmer über Kommunikations-Endeinrichtungen verfügen, denen jeweils eine aktivierbare Mithör-Einrichtung zugeordnet ist.

An dieser Stelle sei bereits erwähnt, daß es sich bei dem Kommunikationsnetz um ein analoges oder digitales Festnetz oder auch um ein Mobilfunknetz handeln kann.

Um einen Netz-Anrufbeantworter überhaupt nutzen zu können, muß der Teilnehmer eine Berechtigung zur Aktivierung einer Anrufweiterschaltung besitzen und die Anrufweiterschaltung muß zur Weiterleitung eines Gesprächs zum Netz-Anrufbeantworter aktiviert sein. Nach dem Wählen der Rufnummer eines Teilnehmers, für den die Rufweiterleitung aktiviert worden ist, wird sowohl eine Verbindung zum Netz-Anrufbeantworter als auch zum gerufenen Teilnehmer aufgebaut. Das vom rufenden Teilnehmer übermittelte Gespräch wird unter vorbestimmten Bedingungen (z. B. unmittelbares Weiterleiten, Besetztzustand des gerufenen Teilnehmers) zum Netz-Anrufbeantworter weitergeleitet und gleichzeitig über die dem gerufenen Teilnehmer zugeordnete Mithör-Einrichtung akustisch wiedergegeben. An dieser Stelle sei darauf hingewiesen, daß die Mithör-Einrichtung als separates Zusatzgerät oder als Bestandteil der Kommunikations-Endeinrichtung des Nutzers ausgebildet sein kann.

Vorteilhafte Weiterbildungen des Verfahrens sind Gegenstand der Unteransprüche 2 und 3.

Um ein automatisches Mithören unterdrücken zu können, kann jedes am Netz-Anrufbeantworter eingehende Gespräch dem gerufenen Teilnehmer zunächst optisch und/oder akustisch zu signalisiert werden. Anschließend kann der gerufene Teilnehmer, wenn er dies wünscht, die Mithör-Einrichtung aktivieren. Auf diese Weise kann der Teilnehmer selbst bestimmen, ob er ein an dem Netz-Anrufbeantworter eingehendes Gespräch sofort mithören will, oder zu einem späteren Zeitpunkt abrufen möchte.

Wie auch bei herkömmlichen kundenindividuellen Anrufbeantwortern kann der Teilnehmer das mitgehörte Gespräch an seiner Kommunikations-Endeinrichtung übernehmen, wobei unter Ansprechen auf die Gesprächsübernahme die Aufzeichnung des Gesprächs im Netz-Anrufbeantworter beendet wird.

Dank dieses Verfahrens ist es möglich, an dem Netz-Anrufbeantworter eingehende Gespräche unmittelbar über die Mithör-Einrichtung des gerufenen Teilnehmers auszugeben, sofern der Kunde die Mithör-Einrichtung aktiviert hat. Dies bedeutet, daß das Gespräch sofort, d.h. ohne weitere Bedienungsschritte des gerufenen Teilnehmers mitgehört werden kann. Wie bereits erwähnt, kann die Mithör-Einrichtung aber auch erst während eines am Netz-Anrufbeantworter eingehenden Gesprächs aktiviert werden.

Das oben bezeichnete Problem wird ebenfalls durch ein Kommunikationssystem nach Anspruch 4 gelöst. Das Kommunikationssystem umfaßt ein Kommunikationsnetz, mit dem wenigstens ein Netz-Anrufbeantworter verbunden ist. Ferner sind mehrere Vermittlungsstellen vorgesehen, denen jeweils wenigstens ein Teilnehmer zugeordnet ist. Zum Kommunikationssystem gehört wenigstens eine Kommunikations-Endeinrichtung, der eine Mithör-Einrichtung mit einem aktivierbaren Lautsprecher zum Mithören eines am Netz-Anrufbeantworter eingehenden Gesprächs, das für den gerufenen Teilnehmer der Kommunikations-Endeinrichtung bestimmt ist, zugeordnet ist. Das Kommunikationsnetz, insbesondere die Vermittlungsstellen sind zum Weiterleiten des Gesprächs zum Netz-Anrufbeantworter und gleichzeitig zur Mithör-Einrichtung des gerufenen Teilnehmers ausgebildet.

Vorteilhafte Weiterbildungen des Kommunikationssystems sind in den Unteransprüchen 4 bis 8 umschrieben.

Damit der Teilnehmer selbst bestimmen kann, ob er ein an seinem Netz-Anrufbeantworter eingehendes Gespräch sofort mithören möchte oder erst nach Wunsch, ist die Mithör-Einrichtung zum akustischen und/oder optischen Signalisieren eines am Netz-Anrufbeantworter eingehenden Gesprächs ausgebildet und weist ferner eine Betätigungseinrichtung zum Aktivieren des Lautsprechers auf.

Bei dem Kommunikationsnetz kann es sich um ein analoges oder digitales, von einem intelligenten Netz steuerbares Festnetz mit mehreren Teilnehmeranschlüssen handeln, denen jeweils wenigstens eine Kommunikations-Endeinrichrung zugeordnet ist. Hierbei kann die Mithör-Einrichtung als separates Zusatzgerät parallel zur Kommunikations-Endeinrichtung an einen Teilnehmeranschluß angeschaltet oder als Bestandteil der Kommunikations-Endeinrichtung ausgebildet sein.

Ist das Kommunikationsnetz ein Mobilfunknetz, so ist die Mithör-Einrichtung zweckmäßigerweise in der mobilen Kommunikations-Endeinrichtung implementiert, um das Tragen zusätzlicher Komponenten zu vermeiden. Allerdings kann die Mithör-Einrichtung im einfachsten Fall auch als separater Ohr- oder Kopfhörer ausgebildet sein.

Die mitgehörten Gespräche können zu jeder Zeit an der Kommunikations-Endeinrichtung übernommen werden. Deshalb sind wenigstens einige der Vermittlungsstellen zum Erkennen einer Gesprächsübernahme an einer Kommunikations-Endeinrichtung ausgebildet und veranlassen unter Ansprechen auf eine erkannte Gesprächsübernahme den Netz-Anrufbeantworter, die jeweilige Gesprächsaufzeichnung zu beenden.

Das oben bezeichnete technische Problem wird ferner durch eine teilnehmerseitig angeordnete Mithör-Vorrichtung gemäß Anspruch 9 gelöst.

Die Mithör-Vorrichtung weist einen aktivierbaren Lautsprecher zum Mithören eines an einem Netz-Anrufbeantworter eingehenden Gesprächs auf und ist als separates Zusatzgerät oder als Bestandteil einer Kommunikations-Endeinrichtung ausgebildet.

Zur Signalisierung eines am Netz-Anrufbeantworters eingehenden und/oder aufgezeichneten Gesprächs ist eine Einrichtung zur optischen und/oder akustischen Signalisierung vorgesehen. Damit der Nutzer selbst entscheiden kann, ob er ein an einem Netz-Anrufbeantworter eingehendes Gespräch mithören möchte oder nicht, ist eine Einrichtung zur Aktivierung des Lautsprechers vorgesehen. Ferner ist dem Lautsprecher eine Empfangseinrichtung zum Verstärken des Gesprächs vorgeschaltet.

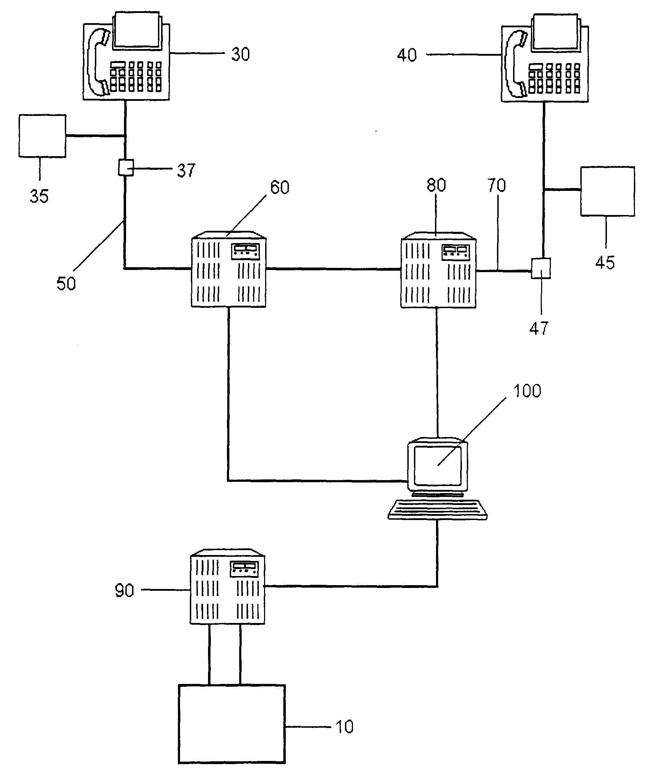

Die Erfindung wird nachfolgend anhand eines Ausführungsbeispiels in Verbindung mit der beiliegenden Zeichnung näher erläutert.

Die Figur zeigt schematisch das in dem oben erwähnten Aufsatz 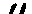 Die T-Net-Box-Der Anrufbeantworter im Netz" beschriebene Kommunikationsnetz mit einem Netz-Anrufbeantworter 10, der in dem Aufsatz als als T-Net-Box bezeichnet wird. Obwohl die nachfolgende Beschreibung auf einem digitalen Festnetz beruht, kann die Erfindung in einem analogen Festnetz oder in einem Mobilfunknetz verwirklicht werden.

Die Figur zeigt beispielhaft und der Deutlichkeit wegen lediglich zwei ISDN-Fernsprechapparate 30 und 40 als Kommunikations-Endeinrichtungen. Das Telefon 30 des Teilnehmers A und eine Mithör-Einrichtung 35, die im vorliegenden Fall als separate Baugruppe ausgebildet ist, sind an einem digitalen Teilnehmeranschluß 37 des Kunden A angeschaltet. Über eine Teilnehmeranschlußleitung 50 ist der Teilnehmeranschluß 37 und somit der Fernsprechapparat 30 und die Mithör-Einrichtung 35 mit einer Teilnehmervermittlungssstelle 60 verbunden. Auf ähnliche Weise ist beim Kunden B ein digitaler Teilnehmeranschluß 47 installiert, an den der Fernsprechapparat 40 und eine wiederum separat ausgeführte Mithör-Einrichtung 45 angeschaltet sind. Über ein Teilnehmeranschlußleitung 70 ist der Teilnehmeranschluß 47 des Kunden B und somit der Fernsprechapparat 40 und die Mithör-Einrichtung 45 an einer entsprechenden Teilnehmervermittlungsstelle 80 verbunden, die beispielsweise direkt mit der Teilnehmervermittlungsstelle 60 verbunden ist.

Um die Netz-Anrufbeantworterfunktion verwirklichen zu können, wird im vorliegenden Beispiel das Kommunikationsnetz durch ein intelligentes Netz gesteuert. Hierzu weisen die Vermittlungsstellen 60 und 80 jeweils einen sogenannten Dienste-Vermittlungspunkt, auch Service Switching Point (SSP) genannt auf, über den die jeweiligen Teilnehmervermittlungsstellen 60 und 80 mit einem Dienste-Steuerungspunkt 100, auch Service Control Point (SCP) genannt, des intelligenten Netzes verbunden sind. Das Kommunikationsnetz verfügt über eine weitere Teilnehmervermittlungsstelle 90 mit einer SSP-Funktion, an die der Netz-Anrufbeantworter 10 angeschaltet ist. Die Teilnehmervermittlungsstelle 90 ist über den SSP-Punkt wiederum mit dem Dienste-Steuerungspunkt 100 des intelligenten Netzes verbunden.

Ausführlichere Erläuterungen zur Einrichtung des Netz-Anrufbeantworters 10 und zur Funktionsweise des intelligenten Netzes erübrigen sich, da diese dem oben zitierten Aufsatz im Einzelnen zu entnehmen sind.

Die Mithöreinrichtungen 35 und 45 weisen jeweils einen aktivierbaren Lautsprecher sowie eine Einrichtung zur optischen und akustischen Signalisierung eines am Netz-Anrufbeantworters 10 für den jeweiligen Kunden eingehenden Gesprächs auf, die allesamt nicht dargestellt sind. Die Aktivierung des Lautsprechers der Mithör-Einrichtungen 35 und 45 erfolgt entweder über eine Taste an der jeweiligen Mithör-Einrichtung selbst oder durch Programmierung über das jeweilige Telefon 30 oder 40.

Die beiden Telefone 30 und 40 sind ferner mit einer Gesprächsübernahmefunktion ausgebildet, die ermöglicht, daß das an der jeweiligen Mithör-Einrichtung 35 bzw. 45 mitgehörte Gespräch übernommen werden kann.

Die Vermittlungsstellen 60 und 80 sind zum Erkennen einer solchen Gesprächsübernahme am jeweiligen Telefon 30 oder 40 ausgebildet und können den Netz-Anrufbeantworter 10 über den Dienste-Steuerungspunkt 100 unter Ansprechen auf eine erkannte Gesprächsübernahme veranlassen, die Gesprächsaufzeichnung für den jeweiligen Kunden zu beenden.

Nachfolgend wird die Funktionsweise des Kommunikationssystems an einem beispielhaften Szenario näher erläutert.

Hierzu sei zunächst angenommen, daß der Kunde A der rufende Teilnehmer und der Kunde B der gerufene Teilnehmer sein soll. Zudem habe der Kunde B für seinen Teilnehmeranschluß 47 eine Anrufweiterleitung zum Netz-Anrufbeantworter 10 in der Teilnehmervermittlungsstelle 80 programmiert. Beispielsweise erfolgt die Anrufweiterleitung dann, wenn der Teilnehmeranschluß 47 besetzt oder der Kunde 8 zur Entgegennahme des Gesprächs an seinem Fernsprechapparat 40 verhindert ist. Es sei nunmehr angenommen, daß der Kunde A an seinem Fernsprechgerät 30 die Rufnummer des Kunden B wählt, der die Anrufweiterleitung zum Netz-Anrufbeantworter 10 aktiviert hat. Die Mithör-Einrichtung 45 beim Kunden B ist derart eingestellt, daß zunächst die Signalisierungs-Einrichtung aktiviert wird und ein automatisches, d.h. unmittelbares Mithören nicht erfolgt. Unter Auswerten der Rufnummer stellt die Teilnehmervermittlungsstelle 60 eine Verbindung zum Teilnehmeranschluß 47 des Kunden B über dessen Teilnehmervermittlungsstelle 80 her. Gleichzeitig stellt die Teilnehmervermittlungsstelle 60 über den Service-Steuerungspunkt 100 und die Teilnehmervermittlungsstelle 90 eine Verbindung zum Netz-Anrufbeantworter 10 her. Wird das am Teilnehmeranschluß 47 anstehende Gespräch zunächst vom Kunden B nicht entgegengenommen, schaltet sich nach einer vorbestimmten Zeit der Anrufbeantworter 10 ein und teilt beispielsweise dem rufenden Kunden A mit, daß er die Gesprächsnotiz jetzt auf sprechen kann. Das nunmehr vom Kunden A kommende Gespräch geht beim Netz-Anrufbeantworter 10 ein und wird dort aufgezeichnet. Gleichzeitig wird dem Kunden B über die Signalisierungs-Einrichtung der Mithör-Einrichtung 45 von der Teilnehmervermittlungsstelle 80 signalisiert, daß im Augenblick ein Gespräch für ihn am Netz-Anrufbeantworter 10 eingeht. Wenn der Kunde B das Gespräch mithören möchte, betätigt er beispielsweise die an der Mithör-Einrichtung 45 angebrachte Taste, um den Lautsprecher und damit die Mithör-Funktion zu aktivieren. Wie bereits erwähnt, ist es auch denkbar, die Mithör-Einrichtung 45 auf ein automatisches Mithören jedes für den Kunden B am Netz-Anrufbeantworter 10 eingehenden Gesprächs einzustellen. In diesem Fall wird jedes für den Kunden B an seinem Netz-Anrufbeantworter 10 eingehenden Gesprächs über den Lautsprecher der Mithör-Einrichtung 45 sofort ausgeben.

Wenn der Kunde B das Gespräch nicht nur mithören sondern auch übernehmen möchte, kann er den Hörer an seinem Fernsprechapparat 40 abheben oder eine für die Funktion 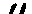 Gesprächsübernahme" programmierte Taste betätigen. Die Teilnehmervermittlungsstelle 80 erkannt die Übernahme des Gesprächs und signalisiert daraufhin über den Dienste-Steuerungspunkt 100 und die Teilnehmervermittlungsstelle 90 dem Netz-Anrufbeantworter 10, die Gesprächsaufzeichnung zu beenden. Nach dem Auslösen der Verbindung kehrt das Kommunikationssystem in seinen Grundzustand wieder zurück.

## Patentansprüche

1. Verfahren zum teilnehmerseitigen Mithören eines an einem Netz-Anrufbeantworter (10) eingehenden Gesprächs, wobei der Netz-Anrufbeantworter (10) mit einem, mehrere Teilnehmer umfassenden Kommunikationsnetz verbunden ist, und wobei wenigstens einige der Teilnehmer über Kommunikations-Endeinrichtungen (30, 40) verfügen, denen jeweils eine aktivierbare Mithöreinrichtung (35, 45) zugeordnet ist,
mit folgenden Verfahrensschritten:
a) Aktivieren einer Anrufweiterschaltung zur Weiterleitung eines Gesprächs zum Netz-Anrufbeantworter (10) für wenigstens einen Teilnehmer;
b) Wählen der Rufnummer eines Teilnehmers, für den die Anrufweiterschaltung aktiviert worden ist;
c) Aufbauen einer Verbindung zum Netz-Anrufbeantworter (10) und zum gerufenen Teilnehmer;
d) Wiedergeben des am Netz-Anrufbeantworter (10) eingehenden Gesprächs über die der Kommunikations-Endeinrichtung (30, 40) des gerufenen Teilnehmers zugeordnete Mithöreinrichtung (35, 45)

2. Verfahren zum teilnehmerseitigen Mithören nach Anspruch 1,
dadurch gekennzeichnet, daß
vor der Durchführung des Schrittes d) das Eingehen eines Gesprächs am Netz-Anrufbeantworter (10) optisch und/oder akustisch dem gerufenen Teilnehmer signalisiert wird und anschließend die Mithöreinrichtung (35, 45) aktiviert werden kann.

3. Verfahren zum teilnehmerseitigen Mithören nach Anspruch 1 oder 2,
dadurch gekennzeichnet, daß
der Teilnehmer das mitgehörte Gespräch an seiner Kommunikations-Endeinrichtung (30, 40) übernehmen kann, und daß
unter Ansprechen auf die Gesprächsübernahme die Aufzeichnung des Gesprächs im Netz-Anrufbeantworter (10) beendet wird.

4. Kommunikationssystem zur Durchführung des Verfahrens nach einem der Ansprüche 1 bis 3 umfassend
wenigstens einen mit einem Kommunikationsnetz verbundenen Netz-Anrufbeantworter (10),
mehrere Vermittlungsstellen (60, 80, 90), denen jeweils wenigstens ein Teilnehmer zugeordnet ist,
gekennzeichnet durch
wenigstens eine Kommunikations-Endeinrichtung (30, 40), der eine Mithör-Einrichtung (35, 45) mit einem aktivierbaren Lautsprecher zum Mithören eines am Netz-Anrufbeantworter (10) eingehenden Gesprächs, das für den gerufenen Teilnehmer der Kommunikations-Endeinrichtung bestimmt ist, zugeordnet ist, wobei
das Kommunikationsnetz zum Weiterleiten des Gesprächs zum Netz-Anrufbeantworter (10) und gleichzeitig zur Mithör-Einrichtung (35, 45) des gerufenen Teilnehmers ausgebildet ist.

5. Kommunikationssystem nach Anspruch 4,
dadurch gekennzeichnet, daß
die Mithör-Einrichtung (35, 45) zum akustischen und/oder optischen Signalisieren ausgebildet ist, und daß
eine Betätigungseinrichtung zum Aktivieren des Lautsprechers vorgesehen ist.

6. Kommunikationssystem nach Anspruch 4 oder 5,
dadurch gekennzeichnet, daß
das Kommunikationsnetz ein analoges oder digitales, von einem intelligenten Netz steuerbares Festnetz mit mehreren Teilnehmeranschlüssen (37, 47) ist, denen jeweils wenigstens eine Kommunikations-Endeinrichtung (30, 40) zugeordnet ist, und daß
die Mithör-Einrichtung (35, 45) als separates Zusatzgerät ausgebildet oder Bestandteil der Kommunikations-Endeinrichtung ist.

7. Kommunikationssystem nach Anspruch 4 oder 5,
dadurch gekennzeichnet, daß
das Kommunikationsnetz ein Mobilfunknetz ist.

8. Kommunikationssystem nach Anspruch 6 oder 7,
dadurch gekennzeichnet, daß
wenigstens einige der Vermittlungsstellen (60, 80) eine Gesprächsübernahme an einer dieser zugeordneten Kommunikations-Endeinrichtung (30, 40) erkennen und unter Ansprechen darauf den Netz-Anrufbeantworter (10) veranlassen, die jeweilige Gesprächsaufzeichnung zu beenden.

9. Teilnehmerseitig angeordnete Mithör-Vorrichtung zum Einsatz in einem Kommunikationssystem nach einem der Ansprüche 4 bis 8
gekennzeichnet durch
einen aktivierbaren Lautsprecher zum Mithören eines an einem Netz-Anrufbeantworter eingehenden Gesprächs.

10. Mithör-Vorrichtung nach Anspruch 9;
gekennzeichent durch eine Einrichtung zur optischen und/oder akustischen Signalisierung eines am Netz-Anrufbeantworter aktuell eingehenden Gesprächs,
eine Einrichtung zur Aktivierung des Lautsprechers, und
eine Empfangseinrichtung zum Verstärken der vom Netz-Anrufbeantworter kommenden Signale.
